# FASCICULE DE BREVET EUROPEEN

(11) **EP 1 575 698 B1**
(45) Date de publication et mention de la délivrance du brevet: **11.10.2006**
(21) Numéro de dépôt: 03812078.8
(22) Date de dépôt: 15.12.2003
(51) Int. Cl.: B01J 8/00

(54) **PROCEDE DE GENERATION DE GAZ DE SYNTHESE PAR OXYDATION PARTIELLE CATALYTIQUE**
VERFAHREN ZUR ERZEUGUNG VON SYNTHESEGAS MITTELS KATALYTISCHER TEILOXIDATION
METHOD FOR GENERATION OF A SYNTHESIS GAS MIXTURE CO/H SB 2 /SB UNDER PRESSURE BY CATALYTIC PARTIAL OXIDATION WITH MINIMISATION OF THE FORMATION OF SOOT

(30) Priorité: 17.12.2002 FR 0216015
(43) Date de publication de la demande: 21.09.2005
(73) Titulaire: L'Air Liquide S. A. à Directoire et Conseil de Surveillance pour l'Etude et l'Exploitation des Procédés Georges Claude, 75321 Paris Cedex 07 (FR)
(72) Inventeur: GARY, Daniel, F-78180 Montigny Le Bretonneux (FR); MENESES, David, F-92130 Issy Les Moulineaux (FR); MULLER, Clotilde, F-92160 Antony (FR)
(74) Mandataire: Mellul-Bendelac, Sylvie Lisette
(86) Numéro de dépôt international: PCT/FR2003/050168
(87) Numéro de publication internationale: WO 2004/058924

(56) Documents cités:
- EP-A- 0 842 894
- WO-A-01/62662
- DE-A- 10 060 371
- US-A- 3 163 498
- US-A- 5 112 527

## Description

La présente invention concerne le domaine des procédés de production d'un mélange gazeux contenant au moins de l'hydrogène (H₂) et du monoxyde de carbone (CO) à partir d'au moins un hydrocarbure, dans lequel on opère une oxydation catalytique partielle d'au moins un hydrocarbure, en présence d'oxygène ou d'un gaz contenant de l'oxygène, pour produire un mélange d'hydrogène et du monoxyde de carbone.

L'hydrogène est un gaz largement utilisé notamment dans le domaine de la chimie.

Ainsi, la production annuelle globale d'hydrogène est de l'ordre de 50 milliards de m³ dont 95 % sont utilisés en raffinage, en pétrochimie, pour la synthèse de méthanol (MeOH) ou encore pour la production d'ammoniac (NH₃).

L'hydrogène marchand, c'est-à-dire la production non captive, ne représente donc que quelques pour cents de cette production globale.

Or, compte tenu des besoins croissants en hydrogène marchand, de l'ordre d'environ + 10 % par an, et des futurs besoins pressentis dans l'industrie en général, notamment en chimie, en pétrochimie, en métallurgie, en électronique, en chimie fine, dans la production d'énergie décentralisée, des transports propres et non polluants, en utilisant les piles à combustible, et compte tenu des problèmes soulevés par l'infrastructure de distribution de ce produit, en particulier son transport, son stockage et les problèmes de sécurité qui y sont liés, il apparaît de plus en plus nécessaire de disposer de sources de production directement sur le site ("on site") d'utilisation.

La production d'hydrogène en grande quantité se fait principalement chez les raffineurs et les grands chimistes par différentes méthodes connues, à savoir :
--> par reformage à la vapeur d'eau des hydrocarbures d'origine pétrolière (naphta) ou du gaz naturel. C'est une réaction très endothermique, effectuée entre 800°C et 900°C avec un ou des catalyseurs et à haute pression, par exemple de l'ordre de 15 bars à 35 bars. Les brûleurs sont situés à l'extérieur des lits catalytiques et le mélange hydrocarbures/vapeur est préchauffé grâce à des échangeurs de chaleur qui utilisent les gaz chauds de combustion. Ce procédé permet d'atteindre des rapports de production H₂/CO entre 3 et 4 suivant le débit de vapeur.
---> par reformage mixte : c'est un procédé auto-thermique où l'énergie thermique nécessaire au reformage à la vapeur sur catalyseur est par exemple apportée par la combustion partielle de CH₄ en CO₂ et H₂O. Par contre, le rapport H₂/CO est plus faible que lors d'une production par reformage à la vapeur d'eau, c'est-à-dire de l'ordre de 2.2 à 2.5.
---> par oxydation partielle d'hydrocarbures. Ce procédé ne nécessite pas de catalyseur. La réaction est effectuée entre 1300°C et 1400°C avec peu ou sans vapeur. Ce procédé est exothermique mais produit moins d'hydrogène que les procédés précédents. C'est pourquoi il est nécessaire de favoriser au maximum la réaction de production d'hydrogène par conversion du CO en présence de vapeur d'eau et sur catalyseur, selon la réaction (1) suivante (dite « réaction du gaz à l'eau ») :

   CO + H₂O → CO₂ + H₂ (1)

De là, pour une production uniquement d'hydrogène, le reformage à la vapeur est le meilleur procédé actuel, en particulier lorsqu'il est associé à la réaction de conversion de gaz à l'eau et à un procédé PSA (Pressure Swing Adsorption = Adsorption à pression modulée) pour la purification de l'hydrogène ainsi produit.

Le rendement énergétique d'un tel procédé est excellent, c'est-à-dire jusqu'à 85% pour de grosses installations en valorisant la vapeur fatale.

Outre les unités de production spécifique, l'hydrogène marchand provient également d'autres sources, à savoir :
---> de la récupération de l'hydrogène produit dans des opérations de déshydrogénation en chimie et raffinage, par exemple par reformage et craquage catalytique ;
---> du détournement d'une partie de l'hydrogène produit chez les producteurs captifs quand il est en excès. Cependant, cette source tend à se tarir compte tenu des besoins croissants en hydrogène, d'une part, pour la désulfuration des charges pour satisfaire aux normes environnementales qui se mettent en place et, d'autre part, pour le traitement hydrogénant de charges de plus en plus lourdes.
---> de la production du coke en sidérurgie.
---> de l'électrolyse du chlorure de sodium (NaCl) où l'hydrogène est coproduit en même temps que le Cl₂.

Par ailleurs, il existe aussi de petites unités de production d'hydrogène faisant appel à la décomposition de molécules riches en atomes d'hydrogène, notamment par craquage thermique de NH₃, par reformage catalytique de CH₃OH ou par dissociation électrolytique de H₂O.

Cependant, la production d'hydrogène à partir d'ammoniac ou de méthanol nécessite toujours une logistique de livraison de ces produits liquides.

De plus, l'ammoniac (NH₃) est un polluant néfaste pour l'environnement (toxicité, odeur, ...) et les réglementations sur ce produit deviennent de plus en plus sévères.

En outre, le prix d'achat de ces produits connaît des variations importantes qui tendent à pénaliser la rentabilité globale des procédés, en particulier dans le cas du méthanol.

Par ailleurs, la production d'hydrogène par électrolyse consomme beaucoup d'énergie (de l'ordre de 5 kWh/ Nm³ d'hydrogène produit) et dans les pays où le prix de l'électricité est élevé, cette solution n'est pas adaptée pour des débits supérieurs à environ 50 Nm³/h.

Ces différents procédés de production d'hydrogène présentent donc de nombreux désavantages et aucun procédé de production actuel ne peut être considéré comme totalement satisfaisant du point de vue industriel.

Dans des travaux antérieurs, la Demanderesse s'était alors attachée à proposer un procédé de production d'hydrogène amélioré par rapport à ces procédés connus, c'est-à-dire qui soit de maintenance et de mise en oeuvre aisées, d'investissement faible, qui utilise du gaz naturel ou du GPL pour la production d'hydrogène, et qui nécessite peu d'utilités telles eau, vapeur.....

En d'autres termes, ces travaux antérieurs (tels que décrits dans le document WO 01/62662) visaient à proposer un procédé de production d'hydrogène gazeux :
- qui soit peu consommateur d'énergie pour entretenir la réaction de production d'hydrogène, c'est-à-dire, si possible, mettant en oeuvre une réaction auto-thermique ;
- ayant un rendement suffisant de conversion de l'hydrocarbure en hydrogène ;
- qui soit compact, d'investissement réduit et de simplicité d'entretien et d'utilisation ;
- qui autorise un démarrage automatique et un fonctionnement en toute sécurité, de préférence sans personnel sur place ;
- permettant d'utiliser une source primaire d'hydrocarbures peu chère;
- qui soit adapté aux productions moyennes, c'est-à-dire de 50 Nm³/h à 300 Nm³/h.

La solution apportée par ces travaux antérieurs peut alors être résumée ainsi : un procédé d'élaboration d'une atmosphère gazeuse, ayant des teneurs contrôlées en hydrogène et en monoxyde de carbone, à partir d'au moins un hydrocarbure léger choisi dans le groupe formé par les C1 à C4 tels que le gaz naturel le méthane, l'éthane ou un mélange de méthane et d'éthane, ou un mélange de butane et de propane, dans lequel :
(a) on opère une oxydation catalytique partielle d'au moins un hydrocarbure, à une température inférieure à 1200°C, à une pression de 3 à 20 bar, et en présence d'oxygène ou d'un gaz contenant de l'oxygène, pour produire de l'hydrogène (H₂) et du monoxyde de carbone (CO) ;
(b) on récupère un mélange gazeux contenant au moins de l'hydrogène. (H₂) et du monoxyde de carbone (CO).
(c) on soumet le mélange gazeux obtenu à l'étape (b) à un refroidissement instantané (brutal) jusqu'à une température comprise entre -20°C et +80°C ;
(d) on soumet le mélange gazeux obtenu à l'étape (c) à une séparation de manière à produire un flux gazeux riche en hydrogène ;
et dans lequel on obtient, à l'étape (b) et/ou à l'étape (c), un mélange gazeux à une pression de 3 à 20 bars.

Dans ce procédé, seule la fraction d'hydrogène est valorisée. Le résiduaire est en revanche éliminé, par exemple par combustion dans une torchère.

On peut également citer les travaux de la Demanderesse tels que rapportés dans le document postérieur FR- 0116581 déposé le 20 décembre 2001, concernant la mise en place, en tête de réacteur, d'un nouvel arrangement permettant de réaliser un pre-mélange homogène des réactifs entrants en toute sécurité.

Il est alors apparu que ces résultats antérieurs de la Demanderesse devaient être encore améliorés, notamment quant à la question du refroidissement (trempe) du gaz de synthèse ainsi produit et des risques de formation de suie induits, pour proposer une technologie améliorée car plus compacte, apte à produire un gaz de synthèse sensiblement à température ambiante.

La solution technique proposée selon la présente invention consiste alors à effectuer la réaction d'oxydation partielle et la trempe du gaz produit (en l'occurrence une trempe directe à l'eau) dans une seule et même enceinte, en réalisant un temps de transport du gaz entre les deux zones (zone réactionnelle et zone de trempe) qui soit extrêmement faible i.e inférieur à quelques dizaines de milli-secondes, typiquement inférieur à 50 ms. Cette trempe rapide (on peut dire instantanée ou quasi instantanée) va permettre de figer instantanément la composition du gaz et limiter la réaction de Boudouard (2 CO → C + CO₂) et donc la génération de suie néfaste pour le procédé. De plus la chaudronnerie du réacteur qui est mise au contact de cette atmosphère corrosive n'est plus exposée dans la plage de température critique (750°C - 450 °C), propice à sa dégradation due au phénomène bien connu dans la littérature dit de « metal dusting ».

L'invention concerne alors un procédé d'élaboration d'une atmosphère gazeuse ayant des teneurs contrôlées en hydrogène et en monoxyde de carbone, dans lequel :
(a) on opère une oxydation catalytique partielle d'au moins un hydrocarbure, à une température inférieure à 1200°C, à une pression de 3 à 20 bar, et en présence d'oxygène ou d'un gaz contenant de l'oxygène, pour produire de l'hydrogène (H₂) et du monoxyde de carbone (CO) ;
(b) on récupère un mélange gazeux contenant au moins de l'hydrogène (H₂) et du monoxyde de carbone (CO) ;
(c) on soumet le mélange gazeux obtenu à l'étape (b) à un refroidissement par contact direct avec de l'eau sous pression jusqu'à une température comprise entre -20°C et +80°C;
et dans lequel on obtient, à l'étape (b) et/ou à l'étape (c), un mélange gazeux à une pression de 3 à 20 bars ;
et se caractérisant en ce que l'on effectue ladite réaction d'oxydation catalytique ainsi que l'étape (c) de refroidissement dans une seule et même enceinte, en réalisant un temps de transport du gaz entre les deux zones de réaction catalytique et de refroidissement qui soit inférieur à quelques dizaines de milli-secondes, préférentiellement inférieur à 50 ms.

Le procédé selon l'invention pourra par ailleurs adopter l'une ou plusieurs des caractéristiques techniques suivantes :
- on soumet le mélange gazeux obtenu à l'issue de l'étape (c) à une étape (d) de séparation de manière à produire un flux gazeux riche en hydrogène ;
- à l'étape (c), le refroidissement est opéré par passage du mélange à refroidir dans une douche d'eau sous pression.
- l'hydrocarbure est choisi dans le groupe des hydrocarbures légers (C1-C4) formé par le gaz naturel, le méthane, l'éthane ou un mélange de méthane et d'éthane, ou un mélange de butane et de propane.
- l'hydrocarbure est le méthane ou le gaz naturel, le rapport de débits volumique CH₄/O₂ étant de préférence compris entre 1.2 et 2.1 .
- le mélange gazeux obtenu à l'étape (b) et/ou à l'étape (c) est à une pression de 4 à 20 bars.
- l'étape (a) est opérée à une pression de 6 à 12 bars.
- le gaz contenant de l'oxygène est un mélange gazeux contenant de l'azote et de l'oxygène, de préférence de l'air.
- le catalyseur est formé d'au moins un métal déposé sur un support inerte, de préférence le métal est le nickel, le rhodium, le platine et/ou le palladium ou un alliage contenant au moins un de ces métaux.
- le mélange gazeux obtenu à l'étape (b) contient approximativement 30 à 40% (en vol. ) d'hydrogène, 15 à 20% de CO et le reste étant de l'azote et éventuellement des traces de CO₂, H₂O ou d'autres impuretés inévitables telles qu'un résiduel de CnHm, de préférence le mélange gazeux obtenu à l'étape (b) contient approximativement 31 à 34% (en vol. ) d'hydrogène, 17 à 19% de CO et le reste étant de l'azote et éventuellement des traces de CO₂, H₂O ou d'autres impuretés inévitables telles qu'un résiduel de CnHm.
- l'étape (a) est opérée à une température comprise entre 600°C et 1090°C, de préférence de 850 à 1000°C.
- à l'étape (d), la séparation permet de produire un flux gazeux riche en hydrogène contenant au moins 80% d'hydrogène, de préférence de 99.9 % à 99.99999 % en volume d'hydrogène.
- la séparation opérée à l'étape (d) est réalisée par mise en oeuvre d'un procédé PSA, d'un procédé TSA ou d'une séparation par perméation membranaire utilisant un ou plusieurs modules membranaire générant, d'une part, ledit flux gazeux riche en hydrogène et, d'autre part, un flux de gaz-déchet, le flux de gaz-déchet étant avantageusement envoyé vers une unité de cogénération servant à produire de l'électricité, de préférence vers une chaudière.
- le procédé comporte l'étape supplémentaire de :
   (e) soumettre le mélange gazeux obtenu à l'étape (b) à une séparation de manière à éliminer au moins une partie des impuretés dioxyde de carbone et/ou vapeur d'eau éventuellement présentes, et produire ainsi une atmosphère gazeuse ayant des teneurs contrôlées en hydrogène, en monoxyde de carbone et en azote.
- la séparation opérée à l'étape (d) est réalisée par mise en oeuvre d'un procédé PSA ou d'un procédé TSA mettant en oeuvre au moins deux adsorbeurs fonctionnant en alternance, au moins l'un des adsorbeurs étant en phase de régénération pendant qu'au moins un autre des adsorbeurs est en phase de production dudit flux gazeux riche en hydrogène.
- la séparation opérée à l'étape (d) est réalisée par perméation membranaire utilisant un ou plusieurs modules membranaire générant, d'une part, ledit flux gazeux riche en hydrogène et, d'autre part, un flux de gaz-déchet contenant principalement de l'azote et du monoxyde de carbone, et éventuellement de l'hydrogène résiduaire.
- on dispose de moyens aptes à permettre l'accélération du mélange gazeux obtenu en sortie de réacteur entre lesdites deux zones de réaction et de refroidissement.

L'invention concerne également une installation d'élaboration d'une atmosphère gazeuse ayant des teneurs contrôlées en hydrogène et en monoxyde de carbone, comprenant :
- un réacteur d'oxydation catalytique partielle apte à oxyder au moins un hydrocarbure, à une température inférieure à 1200°C, à une pression de 3 à 20 bars, et en présence d'oxygène ou d'un gaz contenant de l'oxygène, pour produire de l'hydrogène (H₂) et du monoxyde de carbone (CO) ;
- des moyens de refroidissement du mélange gazeux obtenu en sortie du dit réacteur, par contact direct avec de l'eau sous pression, jusqu'à une température comprise entre -20°C et +80°C;
et se caractérisant en ce que ledit réacteur et lesdites moyens de refroidissement sont situés dans une seule et même enceinte, de manière à réaliser un temps de transport du gaz entre les deux zones de réaction catalytique et de refroidissement qui soit inférieur à quelques dizaines de milli-secondes, préférentiellement inférieur à 50 ms.

Préférentiellement, lesdits moyens de refroidissement comprennent une douche d'eau au sein de laquelle passe le mélange à refroidir.

Selon un des modes de réalisation de l'invention, l'installation comprend un système déflecteur, situé en aval des moyens de refroidissement, apte à séparer les gouttes d'eau afin d'éviter qu'elles ne soient entraînées par le gaz refroidi.

Selon un des modes de réalisation avantageux de l'invention, l'installation comprend un dispositif assurant l'alimentation et la re-circulation de l'eau de refroidissement sous pression, préférentiellement muni d'un système de filtration de l'eau de refroidissement sous pression.

Selon un autre des modes de réalisation avantageux de l'invention, l'installation comprend un système de cône inversé situé entre les deux zones de réaction catalytique et de refroidissement, apte à permettre l'accélération du mélange gazeux obtenu en sortie de réacteur entre lesdites deux zones de réaction et de refroidissement.

On conçoit alors que les avantages d'un tel arrangement sont notamment les suivants :
■ la composition du gaz est figée presque immédiatement : elle ne peut pas se dégrader puisque le procédé est sous contrôle thermodynamique (cette dégradation serait observée lors d'un abaissement de température lent où la thermodynamique du système fait évoluer négativement la composition du gaz de synthèse produit).
■ le risque de formation de suie est supprimé : en quelles secondes (préférentiellement en moins de deux secondes selon la présente invention) la température du gaz passe en dessous de 450°C, la réaction dite de Boudouard ne peut s'effectuer.

Dans ce domaine de la recherche de compacité, on pourra également se reporter aux travaux de la société PRAXAIR tels que rapportés dans le document EP-931 842 qui concerne un réacteur de production d'une atmosphère CO/H₂ réalisée sensiblement à pression atmosphérique pour le traitement thermique de métaux, par oxydation catalytique sur métal noble, avec trempe du mélange produit par échange thermique gaz/gaz (échange entre le gaz produit chaud et les réactifs entrants dans des systèmes tubulaires situés au sein d'une même enceinte), l'auteur s'attachant ici plutôt à réaliser un temps de parcours faible des réactifs entrants entre l'échangeur ayant servi à leur préchauffe et leur entrée dans le réacteur catalytique, ceci afin de limiter les pertes de chaleur mais aussi les risques de réactions prématurées entre les réactifs entrants avant que ceux-ci n'entrent en contact avec le catalyseur.

L'invention sera mieux comprise à la lecture de la description qui suit, faisant référence aux figures annexées suivantes :
- la figure 1 qui montre, vue en coupe transversale, une installation de production d'hydrogène selon les travaux antérieurs de la Demanderesse ;
- la figure 2 qui montre, vue en coupe transversale, une installation permettant la mise en oeuvre de la présente invention.

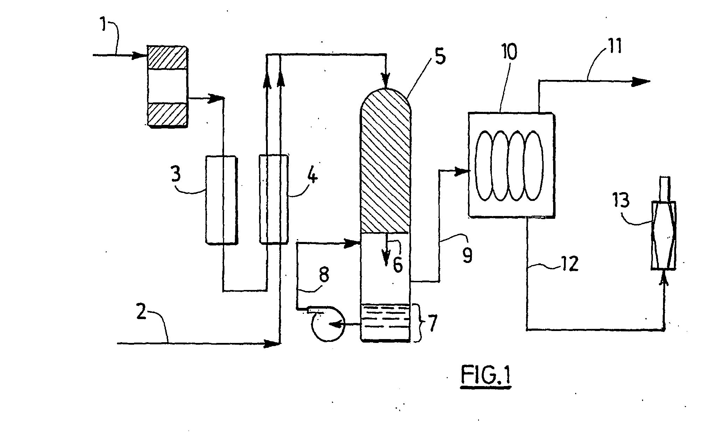

On reconnaît sur la figure 1 un réacteur catalytique 5, alimenté en air 1 (préchauffé au travers d'un réchauffeur 3 et en gaz naturel 2, le mélange étant réalisé au niveau du mélangeur 4.

L' oxydation catalytique partielle (5) s'effectue à une température inférieure à 1200°C, à une pression de 3 à 20 bars, et l'on récupère en 6 un mélange gazeux contenant de l'hydrogène (H₂) et du monoxyde de carbone (CO).

Ce mélange gazeux est soumis en 7 à une trempe à l'eau jusqu'à une température comprise entre -20°C et +80°C . On note le système 8 de recyclage de l'eau de refroidissement.

Le mélange ainsi refroidi est alors soumis en 10 à une étape de séparation de type « PSA », de manière à produire en 11 un flux gazeux riche en hydrogène à une pression située dans la gamme de 3 à 20 bars.

A noter que le résiduaire 12 est en revanche éliminé sur une torchère 13.

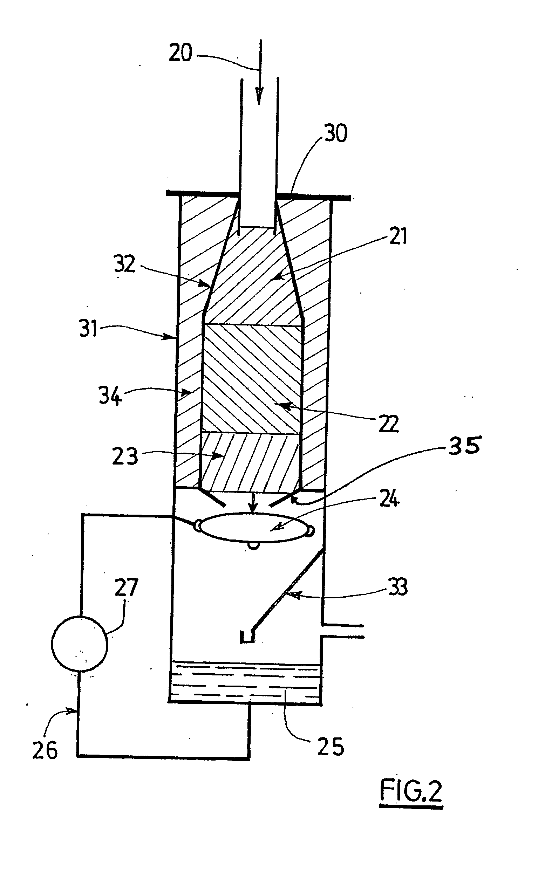

Dans la figure 2, illustrant une installation conforme à l'invention, le mélange 20 d'hydrocarbure et de gaz comburant rencontre pour le mode de réalisation représenté ici, successivement, au sein d'une enveloppe réfractaire 32, une zone de billes inertes 21, une zone de catalyseur 22, puis une autre zone inerte 23.

En sortie de réacteur catalytique, le mélange ainsi obtenu (tel que comportant de l'hydrogène et du CO) aborde immédiatement une zone de refroidissement ici constituée d'une douche (pulvérisation) d'eau 24.

On visualise ici parfaitement le fait que le réacteur 32 et les moyens de refroidissement sont situés dans une seule et même enceinte 31 (enveloppe métallique), de manière à réaliser un temps de transport du gaz entre les deux zones de réaction catalytique et de refroidissement qui soit très faible, en l'occurrence inférieur à quelques dizaines de milli-secondes.

Le réacteur y est isolé par la présence d'un matériau isolant thermique 34.

On note sur cette figure la présence de trois éléments tout particulièrement avantageux caractérisant des modes de réalisations de l'invention :
- le système déflecteur 33, situé en aval des moyens de refroidissement, et apte à séparer les gouttes d'eau afin d'éviter qu'elles ne soient entraînées par le gaz refroidi.
- un système de cône inversé 35 qui permet très avantageusement de réduire encore le temps de transport du gaz entre le réacteur et la zone de refroidissement : par sa mise en place entre le réacteur catalytique et les moyens de refroidissement il permet d'une part l'accélération du mélange gazeux produit, d'autre part son injection substantiellement au centre des moyens de refroidissement (ici la douche d'eau) pour une efficacité améliorée, et enfin en limitant ainsi le contact entre ce gaz chaud et le métal de l'enveloppe extérieure.
- une boucle (26, 27) assurant l'alimentation et la re-circulation de l'eau de refroidissement sous pression entre le bas de l'enceinte et les moyens de douche. Cette boucle est également avantageusement équipée d'un système de filtration apte à piéger les éventuelles particules de suie et/ou de fines de catalyseur issues du procédé.

## Revendications

1. Procédé d'élaboration d'une atmosphère gazeuse ayant des teneurs contrôlées en hydrogène et en monoxyde de carbone, dans lequel :
(a) on opère une oxydation catalytique partielle (22) d'au moins un hydrocarbure, à une température inférieure à 1200°C, à une pression de 3 à 20 bars, et en présence d'oxygène ou d'un gaz contenant de l'oxygène, pour produire de l'hydrogène (H₂) et du monoxyde de carbone (CO) ;
(b) on récupère à l'issue de l'étape (a) un mélange gazeux contenant au moins de l'hydrogène (H₂) et du monoxyde de carbone (CO) ;
(c) on soumet le mélange gazeux obtenu à l'étape (b) à un refroidissement par contact direct avec de l'eau sous pression (24), jusqu'à une température comprise entre -20°C et +80°C;
et dans lequel on obtient, à l'étape (b) et/ou à l'étape (c), un mélange gazeux à une pression de 3 à 20 bars ;
**caractérisé en ce que** l'on effectue ladite réaction d'oxydation catalytique ainsi que l'étape (c) de refroidissement dans une seule et même enceinte (31), le mélange gazeux obtenu à l'issue de l'étape (b) abordant immédiatement la zone de refroidissement de façon à réaliser un temps de transport du gaz entre les deux zones de réaction catalytique et de refroidissement qui soit inférieur à quelques dizaines de milli-secondes, préférentiellement inférieur à 50 ms.

2. Procédé selon la revendication 1, **caractérisé en ce que** l'on soumet le mélange gazeux obtenu à l'issue de l'étape (c) à une étape (d) de séparation de manière à produire un flux gazeux riche en hydrogène.

3. Procédé selon la revendication 1 ou 2 **caractérisé en ce qu'**à l'étape (c), le refroidissement est opéré par passage du mélange à refroidir dans une douche d'eau sous pression.

4. Procédé selon l'une des revendications précédentes, **caractérisé en ce que** l'hydrocarbure est choisi dans le groupe formé par les hydrocarbures légers tels que le gaz naturel, le méthane, l'éthane ou un mélange de méthane et d'éthane, ou un mélange de butane et de propane.

5. Procédé selon l'une des revendications précédentes, **caractérisé en ce que** l'hydrocarbure est le méthane ou le gaz naturel, le rapport de débits volumique CH₄/O₂ étant de préférence compris entre 1.2 et 2.1.

6. Procédé selon l'une des revendications précédentes, **caractérisé en ce que** le mélange gazeux obtenu à l'étape (b) et/ou à l'étape (c) est à une pression de 4 à 20 bars.

7. Procédé selon l'une des revendications précédentes, **caractérisé en ce que** l'étape (a) est opérée à une pression de 6 à 12 bars.

8. Procédé selon l'une des revendications précédentes, **caractérisé en ce que** le gaz contenant de l'oxygène est un mélange gazeux contenant de l'azote et de l'oxygène, de préférence de l'air.

9. Procédé selon l'une des revendications précédentes, **caractérisé en ce que** le catalyseur est formé d'au moins un métal déposé sur un support inerte, de préférence le métal est le nickel, le rhodium, le platine et/ou le palladium ou un alliage contenant au moins un de ces métaux.

10. Procédé selon l'une des revendications précédentes, **caractérisé en ce que** le mélange gazeux obtenu à l'étape (b) contient approximativement 30 à 40% (en vol. ) d'hydrogène, 15 à 20% de CO et le reste étant de l'azote et éventuellement des traces de CO₂, H₂O ou d'autres impuretés inévitables telles qu'un résiduel de CnHm, de préférence le mélange gazeux obtenu à l'étape (b) contient approximativement 31 à 34% (en vol. ) d'hydrogène, 17 à 19% de CO et le reste étant de l'azote et éventuellement des traces de CO₂, H₂O ou d'autres impuretés inévitables telles qu'un résiduel de CnHm.

11. Procédé selon l'une des revendications précédentes, **caractérisé en ce que** l'étape (a) est opérée à une température comprise entre 600°C et 1090°C, de préférence de 850 à 1000°C.

12. Procédé selon l'une des revendications précédentes, **caractérisé en qu'**à l'étape (d), la séparation permet de produire un flux gazeux riche en hydrogène contenant au moins 80% d'hydrogène, de préférence de 99.9 % à 99.99999 % en volume d'hydrogène.

13. Procédé selon l'une des revendications précédentes dans leur dépendance à la revendication 2, **caractérisé en ce que** la séparation opérée à l'étape (d) est réalisée par mise en oeuvre d'un procédé PSA, d'un procédé TSA ou d'une séparation par perméation membranaire utilisant un ou plusieurs modules membranaire générant, d'une part, ledit flux gazeux riche en hydrogène et, d'autre part, un flux de gaz-déchet.

14. Procédé selon la revendication 13, **caractérisé en ce que** le flux de gaz-déchet est envoyé vers une unité de cogénération servant à produire de l'électricité, de préférence vers une chaudière.

15. Procédé selon l'une des revendications précédentes, **caractérisé en ce qu'**il comporte l'étape supplémentaire de :
(e) soumettre le mélange gazeux obtenu à l'étape (b) à une séparation de manière à éliminer au moins une partie des impuretés dioxyde de carbone et/ou vapeur d'eau éventuellement présentes, et produire ainsi une atmosphère gazeuse ayant des teneurs contrôlées en hydrogène, en monoxyde de carbone et en azote.

16. Procédé selon la revendication 13 ou 14, **caractérisé en ce que** la séparation opérée à l'étape (d) est réalisée par mise en oeuvre d'un procédé PSA ou d'un procédé TSA mettant en oeuvre au moins deux adsorbeurs fonctionnant en alternance, au moins l'un des adsorbeurs étant en phase de régénération pendant qu'au moins un autre des adsorbeurs est en phase de production dudit flux gazeux riche en hydrogène.

17. Procédé selon la revendication 13 ou 14, **caractérisé en ce que** la séparation opérée à l'étape (d) est réalisée par perméation membranaire utilisant un ou plusieurs modules membranaire générant, d'une part, ledit flux gazeux riche en hydrogène et, d'autre part, un flux de gaz-déchet contenant principalement de l'azote et du monoxyde de carbone, et éventuellement de l'hydrogène résiduaire.

18. Procédé selon l'une des revendications précédentes, **caractérisé en ce que** le mélange gazeux obtenu à l'issue de l'étape (c) est exempt de suie.

19. Procédé selon l'une des revendications précédentes, **caractérisé en ce que** l'on dispose de moyens (35) permettant de réaliser l'accélération du mélange gazeux obtenu en sortie de réacteur entre lesdites deux zones de réaction et de refroidissement.

20. Installation d'élaboration d'une atmosphère gazeuse ayant des teneurs contrôlées en hydrogène et en monoxyde de carbone, comprenant :
- un réacteur d'oxydation catalytique partielle (22) apte à oxyder au moins un hydrocarbure, à une température inférieure à 1200°C, à une pression de 3 à 20 bars, et en présence d'oxygène ou d'un gaz contenant de l'oxygène, pour produire de l'hydrogène (H₂) et du monoxyde de carbone (CO) ;
- des moyens (24) de refroidissement du mélange gazeux obtenu en sortie du dit réacteur, par contact direct avec de l'eau sous pression, jusqu'à une température comprise entre -20°C et +80°C;
**caractérisée en ce que** ledit réacteur et lesdites moyens de refroidissement sont situés dans une seule et même enceinte (31), et **en ce qu'**elle comprend des moyens (35), situés entre les deux zones de réaction catalytique et de refroidissement, aptes à permettre l'accélération du mélange gazeux obtenu en sortie de réacteur entre lesdites deux zones de réaction et de refroidissement, de manière à réaliser un temps de transport du gaz entre les deux zones de réaction catalytique et de refroidissement qui soit inférieur à quelques dizaines de milli-secondes, préférentiellement inférieur à 50 ms.

21. Installation selon la revendication 20, **caractérisée en ce que** lesdits moyens de refroidissement comprennent une douche d'eau sous pression au sein de laquelle passe le mélange à refroidir.

22. Installation selon la revendication 20 ou 21 , **caractérisée en ce qu'**elle comprend un système déflecteur, situé en aval des moyens de refroidissement, apte à séparer les gouttes d'eau afin d'éviter qu'elles ne soient entraînées par le gaz refroidi.

23. Installation selon l'une des revendications 20 à 22, **caractérisée en ce qu'**elle comprend un dispositif (26, 27) assurant l'alimentation et la re-circulation de l'eau de refroidissement sous pression.

24. Installation selon la revendication 23, **caractérisée en ce que** ledit dispositif (26, 27) assurant l'alimentation et la re-circulation comprend un système de filtration de l'eau de refroidissement, apte à piéger les particules solides issues du procédé.

25. Installation selon l'une des revendications 20 à 24, **caractérisée en ce que** lesdits moyens d'accélération (35), sont constitués d'un système de cône inversé.

## Claims

1. Method for preparing a gaseous atmosphere having controlled hydrogen and carbon monoxide contents, in which:
(a)a partial catalytic oxidation (22) of at least one hydrocarbon is carried out at a temperature below 1200°C, a pressure of 3 to 20 bar and in the presence of oxygen or of a gas comprising oxygen, to produce hydrogen (H₂) and carbon monoxide (CO);
(b)a gas mixture is recovered from step (a), comprising at least hydrogen (H₂) and carbon monoxide (CO);
(c)the gas mixture obtained in step (b) is subjected to cooling by direct contact with pressurized water (24), to a temperature of between -20°C and +80°C;
and in which, in step (b) and/or in step (c), a gas mixture is obtained at a pressure of 3 to 20 bar;
**characterized in that** said catalytic oxidation reaction and the cooling step (c) are carried out in one and the same vessel (31), the gas mixture obtained after step (b) immediately entering the cooling zone so as to have a gas transport time between the two zones of catalytic reaction and cooling that is shorter than a few tens of milliseconds, and preferably shorter than 50 ms.

2. Method according to Claim 1, **characterized in that** the gas mixture obtained from step (c) is subjected to a separation step (d) to produce a hydrogen-rich gas stream.

3. Method according to either of Claims 1 and 2, **characterized in that** in step (c), the cooling is carried out by passage of the mixture to be cooled in a shower of pressurized water.

4. Method according to one of the preceding claims, **characterized in that** the hydrocarbon is selected from the group of light hydrocarbons such as natural gas, methane, ethane or a mixture of methane and ethane, or a mixture of butane and propane.

5. Method according to one of the preceding claims, **characterized in that** the hydrocarbon is methane or natural gas, the CH₄/O₂ volumetric flow rate ratio being preferably between 1.2 and 2.1.

6. Method according to one of the preceding claims, **characterized in that** the gas mixture obtained in step (b) and/or in step (c) is at a pressure of 4 to 20 bar.

7. Method according to one of the preceding claims, **characterized in that** step (a) is carried out at a pressure of 6 to 12 bar.

8. Method according to one of the preceding claims, **characterized in that** the gas comprising oxygen is a gas mixture comprising nitrogen and oxygen, preferably air.

9. Method according to one of the preceding claims, **characterized in that** the catalyst is formed of at least one metal deposited on an inert support, the metal preferably being nickel, rhodium, platinum and/or palladium, or an alloy containing at least one of these metals.

10. Method according to one of the preceding claims, **characterized in that** the gas mixture obtained in step (b) contains approximately 30 to 40% (by volume) of hydrogen, 15 to 20% of CO, and the rest is nitrogen and possibly traces of CO₂, H₂O or other unavoidable impurities such as CnHm waste, and preferably the gas mixture obtained in step (b) contains approximately 31 to 34% (by volume) of hydrogen, 17 to 19% of CO and the rest is nitrogen and possibly traces of CO₂, H₂O or other unavoidable impurities such as CnHm waste.

11. Method according to one of the preceding claims, **characterized in that** step (a) is carried out at a temperature of between 600°C and 1090°C, and preferably between 850 and 1000°C.

12. Method according to one of the preceding claims, **characterized in that** in step (d), the separation serves to produce a hydrogen-rich gas stream containing at least 80% of hydrogen, preferably 99.9% to 99.99999% by volume of hydrogen.

13. Method according to one of the preceding claims in their dependence on Claim 2, **characterized in that** the separation carried out in step (d) is carried out by means of a PSA method, of a TSA method or of a membrane permeation separation using one or more membrane modules, generating, on the one hand, said hydrogen-rich gas stream and, on the other, a waste gas stream.

14. Method according to Claim 13, **characterized in that** the waste gas stream is sent to a cogeneration unit for generating electricity, preferably to a boiler.

15. Method according to one of the preceding claims, **characterized in that** it comprises the supplementary step of:
(e)subjecting the gas mixture obtained in step (b) to a separation in order to remove at least a portion of the carbon dioxide and/or steam impurities that may be present, and thereby to produce a gaseous atmosphere having controlled contents of hydrogen, carbon monoxide and nitrogen.

16. Method according to either of Claims 13 and 14, **characterized in that** the separation carried out in step (d) is carried out by means of a PSA method or a TSA method employing at least two adsorbers operating alternately, at least one of the adsorbers being in a regeneration phase while at least another of the adsorbers is in a phase of production of said hydrogen-rich gas stream.

17. Method according to either of Claims 13 and 14, **characterized in that** the separation carried out in step (d) is carried out by membrane permeation using one or more membrane modules generating, on the one hand, said hydrogen-rich gas stream and, on the other, a waste gas stream mainly containing nitrogen and carbon monoxide, and possibly residual hydrogen.

18. Method according to one of the preceding claims, **characterized in that** the gas mixture obtained from step (c) is free of soot.

19. Method according to one of the preceding claims, **characterized in that** means (35) are available for accelerating the gas mixture obtained at the reactor outlet between said two zones of reaction and cooling.

20. Installation for preparing a gaseous atmosphere having controlled hydrogen and carbon monoxide contents, comprising:
- a partial catalytic oxidation reactor (22) suitable for oxidizing at least one hydrocarbon, at a temperature below 1200°C, a pressure of 3 to 20 bar and in the presence of oxygen or of a gas comprising oxygen, to produce hydrogen (H₂) and carbon monoxide (CO);
- means (24) for cooling the gas mixture obtained at the outlet of said reactor, by direct contact with pressurized water, to a temperature of between -20°C and +80°C;
**characterized in that** said reactor and said cooling means are located in one and the same vessel (31) and **in that** it comprises means (35), located between the two zones of catalytic reaction and cooling, suitable for permitting the acceleration of the gas mixture obtained at the reactor outlet between said two zones of reaction and of cooling, so as to have a gas transport time between the two zones of catalytic reaction and cooling that is shorter than a few tens of milliseconds, and preferably shorter than 50 ms.

21. Installation according to Claim 20, **characterized in that** said cooling means comprise a shower of pressurized water through which the mixture to be cooled passes.

22. Installation according to either of Claims 20 and 21, **characterized in that** it comprises a deflector system, located downstream of the cooling means, suitable for separating the drops of water in order to prevent them from being entrained by the cooled gas.

23. Installation according to one of Claims 20 to 22, **characterized in that** it comprises a device (26, 27) for supplying and recirculating pressurized cooling water.

24. Installation according to Claim 23, **characterized in that** said supply and recirculation device (26, 27) comprises a cooling water filtration system, able to trap the solid particles issuing from the method.

25. Installation according to one of Claims 20 to 24, **characterized in that** said acceleration means (35) consist of an inverted cone system.

## Patentansprüche

1. Verfahren zur Erzeugung einer Gasatmosphäre, die kontrollierte Wasserstoff- und Kohlenmonoxidgehalte aufweist, bei dem man:
(a) eine katalytische Teiloxidation (22) mindestens eines Kohlenwasserstoffs durchführt, bei einer Temperatur unter 1200 °C, bei einem Druck von 3 bis 20 bar und in Gegenwart von Sauerstoff oder eines sauerstoffhaltigen Gases, um Wasserstoff (H₂) und Kohlenmonoxid (CO) zu erzeugen;
(b) am Ausgang des Schrittes (a) ein Gasgemisch entnimmt, das mindestens Wasserstoff (H₂) und Kohlenmonoxid (CO) enthält;
(c) das im Schritt (b) erhaltene Gasgemisch einer Kühlung durch direkten Kontakt mit Wasser unter Druck (24) unterzieht, bis zu einer Temperatur zwischen -20 und +80 °C;
und bei dem man im Schritt (b) und/oder im Schritt (c) ein Gasgemisch bei einem Druck von 3 bis 20 bar erhält;
**dadurch gekennzeichnet, dass** man die katalytische Oxidierungsreaktion sowie den Schritt (c) der Abkühlung in einem einzigen Behälter (31) durchführt, wobei das nach dem Schritt (b) erhaltene Gasgemisch, sofort in die Kühlzone eintritt, so dass eine Transportzeit des Gases zwischen den beiden Zonen der katalytischen Reaktion und der Abkühlung erreicht wird, die unter einigen "Zig" Millisekunden, vorzugsweise unter 50 ms liegt.

2. Verfahren nach Anspruch 1, **dadurch gekennzeichnet, dass** man das nach Schritt (c) erhaltene Gasgemisch einem Schritt (d) der Auftrennung unterzieht, um einen wasserstoffreichen Gasstrom zu erhalten.

3. Verfahren nach Anspruch 1 oder 2, **dadurch gekennzeichnet, dass** im Schritt (c) das Abkühlen **dadurch** bewerkstelligt wird, dass das zu kühlende Gemisch eine Dusche mit Wasser unter Druck passiert.

4. Verfahren nach einem der vorhergehenden Ansprüche, **dadurch gekennzeichnet, dass** der Kohlenwasserstoff in der Gruppe gewählt wird, die aus leichten Kohlenwasserstoffen wie Erdgas, Methan, Ethan oder einem Gemisch von Methan und Ethan, oder einem Gemisch von Butan und Propan gebildet wird.

5. Verfahren nach einem der vorhergehenden Ansprüche, **dadurch gekennzeichnet, dass** der Kohlenwasserstoff das Methan des Erdgases ist, wobei das Volumenstromverhältnis CH₄/O₂ vorzugsweise zwischen 1,2 und 2,1 liegt.

6. Verfahren nach einem der vorhergehenden Ansprüche, **dadurch gekennzeichnet, dass** das im Schritt (b) und/oder im Schritt (c) erhaltene Gasgemisch unter einem Druck von 4 bis 20 bar steht.

7. Verfahren nach einem der vorhergehenden Ansprüche, **dadurch gekennzeichnet, dass** der Schritt (a) bei einem Druck von 6 bis 12 bar durchgeführt wird.

8. Verfahren nach einem der vorhergehenden Ansprüche, **dadurch gekennzeichnet, dass** das Sauerstoffhaltige Gas ein Gasgemisch ist, das Stickstoff und Sauerstoff enthält, vorzugsweise Luft.

9. Verfahren nach einem der vorhergehenden Ansprüche, **dadurch gekennzeichnet, dass** der Katalysator aus mindestens einem Metall gebildet wird, das auf ein inertes Trägermaterial aufgebracht ist, vorzugsweise ist das Metall Nickel, Rhodium, Platin und/oder Palladium oder eine Legierung, die mindestens eins dieser Metalle enthält.

10. Verfahren nach einem der vorhergehenden Ansprüche, **dadurch gekennzeichnet, dass** das in Schritt (b) erhaltene Gasgemisch etwa 30 bis 40 Volumenprozent Wasserstoff, 15 bis 20 % CO enthält und der Rest Stickstoff und eventuell Spuren von CO₂, H₂O oder anderen unvermeidlichen Verunreinigungen ist wie ein CₙHₘ-Rückstand; vorzugsweise enthält das in Schritt (b) erhaltene Gasgemisch etwa 31 bis 34 Volumenprozent Wasserstoff, 17 bis 19 % CO, und der Rest ist Stickstoff und eventuell Spuren von CO₂, H₂O oder anderen unvermeidlichen Verunreinigungen wie ein CₙHₘ-Rückstand.

11. Verfahren nach einem der vorhergehenden Ansprüche, **dadurch gekennzeichnet, dass** der Schritt (a) bei einer Temperatur durchgeführt wird, die zwischen 600 °C und 1090 °C liegt, vorzugsweise zwischen 850 °C und 1000 °C.

12. Verfahren nach einem der vorhergehenden Ansprüche, **dadurch gekennzeichnet, dass** im Schritt (d) die Auftrennung es erlaubt, einen wasserstoffreichen Gasstrom zu erzeugen, der mindestens 80 Volumenprozent Wasserstoff enthält, vorzugsweise zwischen 99,9 und 99,99999 Volumenprozent.

13. Verfahren nach einem der vorhergehenden Ansprüche, in Abhängigkeit von Anspruch 2, **dadurch gekennzeichnet, dass** die im Schritt (d) durchgeführte Auftrennung durchgeführt wird durch die Anwendung eines PSA-Verfahrens, eines TSA-Verfahrens oder einer Membranpermeations-Auftrennung, die zum einen den wasserstoffreichen Gasstrom erzeugen und zum anderen einen Abgasstrom.

14. Verfahren nach Anspruch 13, **dadurch gekennzeichnet, dass** der Abgasstrom in eine Kogenerationseinheit geführt wird, die zur Elektrizitätserzeugung dient, vorzugsweise in einen Heizkessel.

15. Verfahren nach einem der vorhergehenden Ansprüche, **dadurch gekennzeichnet, dass** es zusätzlich einen Schritt (e) umfasst, bei dem die im Schritt (b) erhaltene Gasmischung einer Auftrennung unterzogen wird, um gegebenenfalls mindestens einen Teil der Kohlendioxid- und Wasserdampfverunreinigungen abzutrennen und so eine Gasatmosphäre zu erzeugen, die kontrollierte Gehalte an Wasserstoff, Kohlenmonoxid und Stickstoff aufweist.

16. Verfahren nach Anspruch 13 oder 14, **dadurch gekennzeichnet, dass** die im Schritt (d) durchgeführte Auftrennung durch die Anwendung eines PSA-Verfahrens oder eines TSA-Verfahrens erzielt wird, die mindestens zwei Adsorber anwenden, die abwechselnd funktionieren, wobei mindestens einer der Adsorber in der Regenerationsphase ist, während mindestens ein anderer der Adsorber in der Phase ist, in welcher der wasserstoffreiche Gasstrom erzeugt wird.

17. Verfahren nach Anspruch 13 oder 14, **dadurch gekennzeichnet, dass** die im Schritt (d) durchgeführte Auftrennung durch Membranpermeation erzielt wird, wobei ein oder mehrere Membranmodule verwendet werden, die zum einen den wasserstoffreichen Gasstrom erzeugen und zum anderen einen Abgasstrom, der hauptsächlich Stickstoff und Kohlenmonoxid sowie eventuell restlichen Wasserstoff enthält.

18. Verfahren nach einem der vorhergehenden Ansprüche, **dadurch gekennzeichnet, dass** der nach Schritt (c) erhaltene Gasstrom russfrei ist.

19. Verfahren nach einem der vorhergehenden Ansprüche, **dadurch gekennzeichnet, dass** man über Mittel (35) verfügt, die es erlauben, die Beschleunigung des am Reaktorausgang erhaltenen Gasgemisches zwischen der Reaktionszone und der Kühlzone zu erreichen.

20. Anlage zur Erzeugung einer Gasatmosphäre, die kontrollierte Wasserstoff- und Kohlenmonoxidgehalte aufweist, die folgendes umfasst:
- einen Reaktor zur katalytischen Teiloxidation (22) mindestens eines Kohlenwasserstoffs bei einer Temperatur unter 1200 °C, bei einem Druck von 3 bis 20 bar und in Gegenwart von Sauerstoff oder eines sauerstoffhaltigen Gases, um Wasserstoff (H₂) und Kohlenmonoxid (CO) zu erzeugen;
- Mittel, um das am Ausgang des Reaktors erhaltene Gasgemisch durch direkten Kontakt mit Wasser unter Druck (24) bis zu einer Temperatur zwischen -20 und +80 °C zu kühlen;
**dadurch gekennzeichnet, dass** der Reaktor und die Kühlmittel im selben Behälter (31) angeordnet sind und dass sie Mittel (35) umfasst, die zwischen der Zone der katalytischen Reaktion und der Kühlzone angeordnet sind, die es erlauben, die Beschleunigung des am Reaktorausgang erhaltenen Gasgemisches zwischen der Reaktionszone und der Kühlzone zu erreichen, so dass eine Transportzeit des Gases zwischen den beiden Zonen der katalytischen Reaktion und der Abkühlung erreicht wird, die unter einigen "Zig" Millisekunden, vorzugsweise unter 50 ms liegt.

21. Anlage nach Anspruch 20, **dadurch gekennzeichnet, dass** die Kühlmittel eine Dusche mit Wasser unter Druck umfassen, durch die das zu kühlende Gemisch geführt wird.

22. Anlage nach Anspruch 20 oder 21, **dadurch gekennzeichnet, dass** sie ein Deflektorsystem umfasst, das nach den Kühlmitteln angeordnet ist und geeignet ist, die Wassertropfen abzutrennen, um zu verhindern, dass sie durch das abgekühlte Gas mitgerissen werden.

23. Anlage nach einem der Ansprüche 20 bis 22, **dadurch gekennzeichnet, dass** sie eine Anordnung (26, 27) umfasst, welche die Einspeisung und die Umwälzung des Kühlwassers unter Druck sicherstellt.

24. Anlage nach Anspruch 23, **dadurch gekennzeichnet, dass** die Anordnung (26, 27), welche die Einspeisung und die Umwälzung des Kühlwassers unter Druck sicherstellt ein System zur Filterung des Kühlwassers umfasst, das geeignet ist, die bei dem Verfahren erzeugten Feststoffe festzuhalten.

25. Anlage nach einem der Ansprüche 20 bis 24, **dadurch gekennzeichnet, dass** die Mittel zur Beschleunigung (35) aus einem umgekehrten Konus bestehen.
